# EUROPEAN PATENT APPLICATION

(11) **EP 2 747 490 A1**
(43) Date of publication of application: **25.06.2014**
(21) Application number: 12198264.9
(22) Date of filing: 19.12.2012
(51) Int. Cl.: H04W 48/20

(54) **Session termination in an energy-efficient cellular wireless telecommunications system**

(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Jorguseski, Ljupco, 2282 TR Rijswijk (NL); Litjens, Remco, 2352 VH Voorschoten (NL); van der Wal, Jacob, 2613 VE Delft (NL)
(74) Representative: Wuyts, Koenraad Maria

(57) **Abstract**

The invention relates to a wireless access telecommunications system comprising at least one SA-cell and a plurality of LA-cells. A method for a terminal to facilitate selection of an LA-cell to camp on when in an idle mode is disclosed. The method includes steps of, while the terminal is in an active mode having a wireless connection with the SA-cell, the terminal obtaining, via the wireless connection with the SA-cell, a set of configuration parameters of one or more LA-cells of the plurality of the LA-cells that are relevant for the SA-cell and selecting, out of the one or more LA-cells, one LA-cell to camp on, where the selection is performed based on the received set of the configuration parameters. In this manner, the terminal may select a suitable LA-cell to camp on in a manner that is quick and energy-efficient.

## Description

### FIELD OF THE INVENTION

Generally, the invention relates to the field of wireless telecommunications. More specifically, the invention relates to the termination of a data session between a terminal and a cell in an energy-efficient cellular wireless network.

### BACKGROUND OF THE INVENTION

A cellular wireless access telecommunications network (system) typically includes multiple base stations, also known as, for example, base terminal station in GSM, NodeB in WCDMA (UMTS), and evolved NodeB or eNB in LTE. A base station includes at least transmitting and receiving equipment to support wireless communication with a (possibly mobile) terminal, in standardisation more formally known as UE (User Equipment). The range that can be covered with the transmitter/receiver in a base station is limited. The area that can be served by the transmitter/receiver of a base station is referred to as its "coverage area" or as the "cell." As used herein, the term "cell" refers to both the base station itself and to its associated coverage area.

In such a network, it is common to distinguish a terminal to be in an 'idle mode' or in an 'active mode'. In the active mode, the terminal is able to exchange data (e.g. sending/receiving an e-mail or making a phone call) via a cell in which the terminal is located. This requires resources in the network (e.g. radio resources such as frequencies and/or codes and/or time slots) and also requires the terminal and the network to provide power for the purpose. In the idle mode, the terminal is not able to exchange data and, therefore, does not require the above resources and consumes less power. A terminal in the idle mode only regularly listens to signals broadcast by the cells and selects a 'best cell', for example the cell with the signal that the terminal receives as strongest. A terminal in the idle mode also monitors the paging channel transmitted by the selected cell for a paging message addressing the terminal. Such an (idle mode) terminal is said to 'camp on' the selected cell.

In legacy wireless cellular networks (e.g. GSM, UMTS, LTE) a transition from active mode to idle mode is marked by the release of the associated Radio Resource Control (RRC) connection that supported the wireless exchange of information (user data, signalling, control information) between the terminal and the serving cell (base station). For example, in UMTS and LTE, when an RRC connection is released, the terminal makes a transition from the RRC_CONNECTED mode to the RRC_IDLE mode. This transition is managed by the base station sending an RRC CONNECTION RELEASE message to the terminal (see TS 36.331 for LTE; TS 25.331 for UMTS). Subsequently, the idle mode terminal camps on typically the same cell that previously served it and monitors relevant broadcast signals of that cell, e.g. the cell's paging channel.

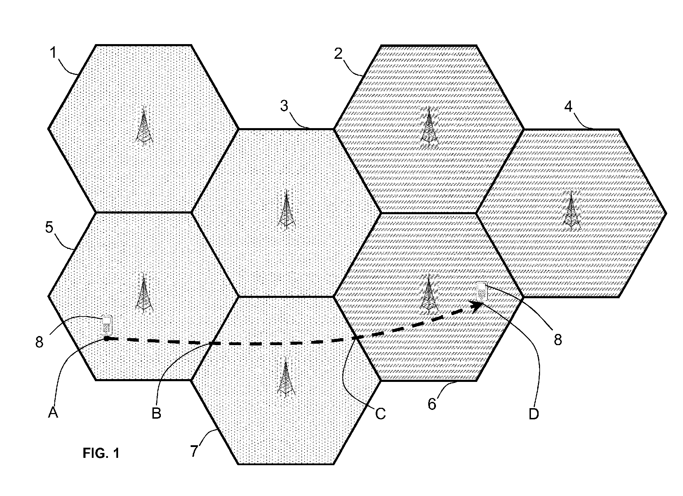

When, for example because of terminal mobility, a different cell is identified as best cell, the terminal may re-select the different cell as 'best cell' and camp on the newly selected cell. FIG. 1 illustrates, in a conventional simplified hexagonal pattern, the coverage areas of each of seven cells, numbered 1 to 7. Further cells surrounding the depicted cells may be present but are not shown. An idle terminal 8 may be located in position A and camp on cell 5. When the terminal 8 moves along a route indicated by the dashed line and when the terminal approaches point B, the terminal may find cell 7 to be a better cell on and may re-select cell 7 to camp on. Similarly, when the terminal moves further along the route indicated by the dashed line and when the terminal approaches point C, the terminal may find cell 6 to be a better cell on and may re-select cell 6 to camp on.

In a cellular wireless network it is further common that multiple cells are organized in a so-called 'routing area'. Alternative terms used in literature and standardization include 'paging area', 'location area', 'tracking area', etc., all referring to basically the same concept. In the following, the term 'routing area' is used. In Figure 1, cells 1, 3, 5 and 7 are associated with a one routing area, indicated by a light shading, while cells 2, 4 and 6 are associated with another routing area, indicated by a darker shading.

Usually, the broadcast signals transmitted by a cell, carry system information which, among other things, comprises an indication of the cell's identity and of the routing area associated with the cell. A terminal, receiving the cell's broadcast signals is thus able to derive both the cell's identity and the cell's routing area.

In conventional cellular wireless networks, an idle mode terminal is configured, after re-selecting a different cell to camp on, to perform a so-called routing area update if the terminal detects that the newly selected cell is associated with a different routing area than the previous cell. With a routing area update the terminal informs the network, typically a mobility management entity in the network, that the terminal is in a cell of the particular routing area, i.e. is camping on one of the cells in that routing area. The network, e.g. the mobility management entity, maintains, for each idle mode terminal, a register indicating at least the routing area, and possibly also the cell, of the most recent routing area update by the terminal. Referring to FIG. 1, the terminal's cell re-selection from cell 5 to cell 7 around position B would not lead to a routing area update because both cells are associated with the same routing area. In contrast, the terminal's cell re-selection from cell 7 to cell 6 around position C would lead to a routing area update because cell 6 is associated with a different routing area than the previous cell 7. The terminal, in order to determine whether a routing area update should be performed, also maintains a register indicating the most recent routing area reported to the network. When the routing area indication of the newly selected cell does not match (e.g. is not the same as) the indication stored in the terminal's register, a routing area update should be performed and the terminal stores the new routing area associated with the newly selected cell in the terminal's routing area register. In this manner, the terminal's routing area register is supposed to match the routing area registered in the network's location register.

In the simple example described above each cell is associated with only a single routing area, as is e.g. common in GSM/GPRS and UMTS networks. However, it is possible that a cell is associated with more than a single routing area. Then the cell may broadcast e.g. multiple routing area identifiers in its broadcast signals. A terminal, detecting that a newly selected cell is associated with multiple routing areas, should perform a routing area update when none of the cell's routing areas matches the routing area registered in the terminal. Thus, different routing areas may, at least partially, overlap, where with a single routing area associated with each cell there will be distinct and 'hard' boundaries between adjacent routing areas.

In some technologies, such as e.g. in LTE, a cell is typically associated with a single so-called tracking area and the network may provide a terminal with a list of tracking area identifiers, called a TAI list. The TAI list is registered by the network (e.g. in a mobility management entity) and by the terminal. A terminal should perform a routing area update when e.g. a single tracking area of the newly selected cell does not match any of the tracking area registered in the terminal (i.e. none of the TAIs in the TAI list). Thus, the aggregate of the tracking areas serves as a routing area described above.

Performing a routing area update typically requires the idle mode terminal to make a transition to the active mode to establish a signalling connection and/or an exchange of network control messages with the network via the newly selected cell and to inform the network about the terminal's current cell and/or routing area. Subsequently the signalling connection is terminated and the terminal resumes to the idle mode. On the basis of the information obtained from the routing area update, the network is enabled to keep track of each terminal's location in terms of the routing area. This information is maintained, for example, in a Location Register, a Home Location Register (HLR), a Visitor Location Register (VLR), a Home Subscriber Server (HSS), Mobility Management Entity (MME), etc, of the network, where each of these entities may be implemented in various ways, e.g. in a single network node in a centralized manner or distributed over various different network nodes, possibly using different levels of hierarchy. For example, for active mode terminals, the terminal location may be registered down to the level of the serving cell partially in the SGSN serving the terminal, partially in the GGSN serving the SGSN, and partially in the HLR/HSS. For idle mode terminals, the terminal location may be registered down to the routing area in the HLR/HSS.

When the network needs to page an idle terminal, for example because of an incoming call for the terminal, the network instructs all the cells associated with the terminal's last known routing area to transmit one or more paging messages for that terminal. The terminal receives the paging message from the cell in the routing area it is currently camping on, and takes appropriate action.

The network operator configures which and how many cells are associated with a particular routing area. With fewer cells in a routing area, the paging message is to be transmitted in correspondingly fewer cells, which is advantageous for the network. At the other hand, with fewer cells per routing area, the number of routing area updates will be larger, which is disadvantageous both for the network and for the moving terminals. Thus, the network operator may have to find a compromise and make a trade-off. In practice, the routing area in legacy cellular networks may range from a few to tens or even a hundred cells.

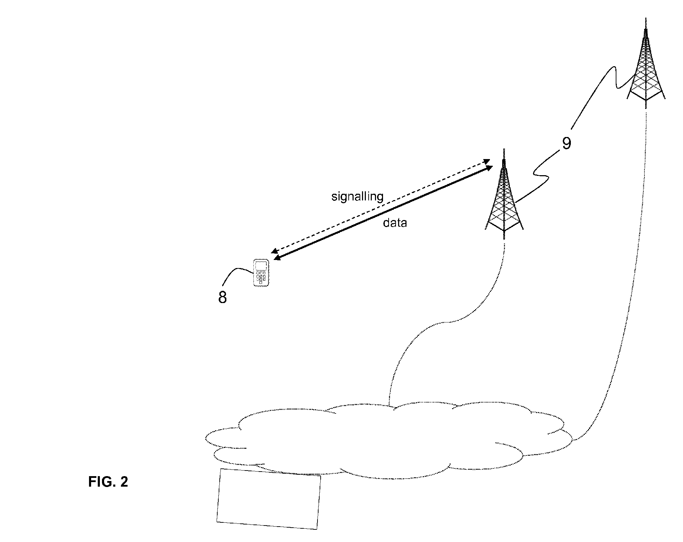

As is illustrated in FIG. 2, for the LTE network as well as for other legacy networks such as e.g. GSM and UMTS, all transmissions, be it signalling or data, occur between the terminal 8 and a single cell, e.g. one of the cells 9 illustrated in FIG. 2, which is the same cell that the terminal was camping on when it was in idle mode.

Recently, a new, more energy efficient, network architecture is being developed. The architecture is referred to as "Beyond Cellular Green Generation" (BCG2) network and attempts to reduce the Green House Gas emission generated by the Information and Communication Technology (ICT) sector. A BCG2 network is envisioned to include a physical architecture that is rather different from the legacy networks described above.

One aspect in the new architecture is the use of relatively small cells. High bit rate data connections can be much more efficiently provided with a larger number of (at least partially overlapping) small cells (e.g. microcells, picocells, femtocells) than with a fewer number of larger cells (e.g. macrocells).

A further aspect in the new architecture is that the power consumption of a cell is envisioned to scale, as much as possible, with the service actually provided (e.g. with the number of active terminals served, with the bit rate provided to a terminal, with the distance covered by the connection to a terminal, etc.). One approach for realizing this vision includes putting those cells that do not actually serve an active terminal into a power-save mode, e.g. switching those cells almost completely off. Another, complementary, approach includes significantly reducing or refraining from transmitting broadcast signals that are common in conventional networks. The transmission of these broadcast signals causes a large overhead, in particular for cells operating at less than full load.

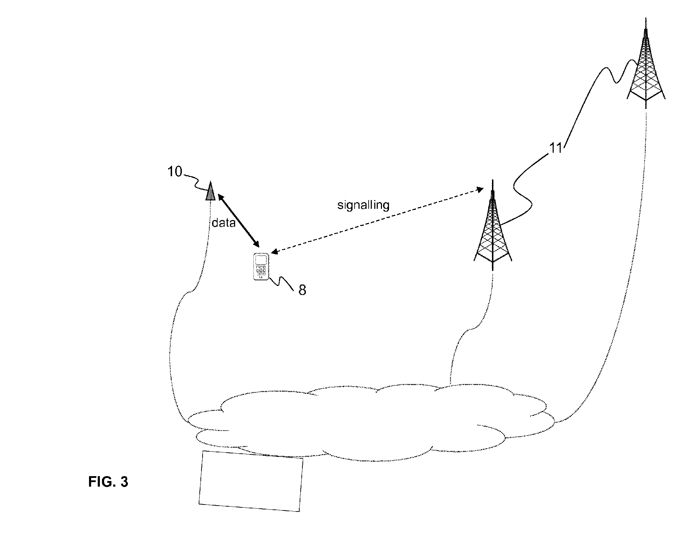

Yet another aspect in the new architecture is that a cell's various tasks and functions in a conventional cellular network are distributed over two different types of cells. The new architecture, schematically illustrated in FIG. 3, envisions distinguishing between different types of cells, where each type of cell is optimised for specific tasks. A first type of cells, in this text referred to as 'Small Area (SA) cell' and illustrated in FIG. 3 as a cell 10, is primarily optimized to support the wireless exchange of data with terminals 8 in an active mode. This type of cells is optimised to provide high bit rate data connections. High bit rate connections can be much more efficiently provided with at least partially overlapping smaller cells, of which a larger number may be used to cover a certain area, than with a fewer number of larger cells, thus greatly improving the energy-efficiency when user data is actually exchanged during a data session. In addition, by not transmitting signals when that is not needed, energy efficiency is even further improved. For example, the SA-cell may revert to a stand-by mode or may even be switched off when the SA-cell does not need to support a connection of an active mode terminal. Such stand-by and/or switch off may also apply to part of the SA-cell, e.g. to part of its resources.

A second type of cells, in this text referred to as 'Large Area (LA) cell' and illustrated in FIG. 3 as a cell 11, is primarily optimized for other functions in a cellular network, in particular those applicable to the terminal 8 in idle mode. An idle mode terminal 8 camps on an LA-cell 11, paging messages to terminal 8 in an idle mode are transmitted via the LA-cell 11, and mobility management for the idle mode terminal 8 relies on the LA-cell 11. Therefore, LA-cells are normally switched on to perform these functions. In this architecture, it is not excluded that an LA-cell may also support signalling connections, e.g. signalling procedure to attach to or to detach from the network, to perform routing area updates, to initiate a data connection, etc., or may even support data connections. For example, data connections which last only for a short time and/or via which only little data is exchanged (e.g. in machine-to-machine communications applications) may be more efficiently supported by an LA-cell than by an SA-cell which is still to be activated (e.g. switched on). In comparison to an SA-cell, an LA-cell typically covers a larger area, for example that comparable to the area of a conventional macrocell or even larger. Together, the LA-cells provide near contiguous coverage in the area desired to be covered, much like in a conventional network.

An SA-cell covers a smaller area than an LA-cell, for example comparable to that of a conventional microcell, picocell or femtocell. Together, the SA-cells may support a certain bit rate in the near-contiguous area desired to be covered. An SA-cell only transmits signals when and in so far it is needed; it may be regarded to be normally 'off' or in a power-save or stand-by mode. An idle terminal also does not camp on an SA-cell.

To summarize some of the differences between SA-cells and LA-cells:
- SA-cells are optimised to serve terminals in active mode, while LA-cells are not
- SA-cells are optimised for the exchange of user data up to very high bit rates, while LA-cells are not
- To be able to support high bit rate in an energy-efficient way, the distance to be covered by a SA-cell should be not too large. Hence, the maximum radius of an SA-cell is smaller than that of an LA-cell. Consequently, the same applies, even to a greater degree, to the coverage area of an SA-cell compared to the coverage area of an LA-cell
- LA-cells wireless transmission/reception is designed to support both idle and active terminals, while SA-cell wireless transmission/reception is designed only to support active terminals
- A terminal in an idle mode camps on an LA-cell, not on an SA-cell
- A paging message to a terminal in an idle mode is transmitted by an LA-cell, not by an SA-cell
- Mobility management of a terminal in an idle mode is based on LA-cells, not on SA-cells
- LA-cells are grouped in 'location areas' while SA-cells not. Therefore SA-cells do not broadcast 'location area ID'
- An LA-cell is typically 'always on', while an SA-cell is typically 'only on when needed'
- An LA-cell is typically broadcasting complete system related information (e.g. carrier frequency, system bandwidth, location area ID, neighbor lists, etc.) while at SA-cell the broadcast of system information is reduced to a minimum.

Although the new network described above has been referred to as a BCG2 network, this term may change in the future. Therefore, in the context of the present application, a network having such architecture will be referred to as an "energy-efficient cellular wireless network" or as an "energy-efficient network".

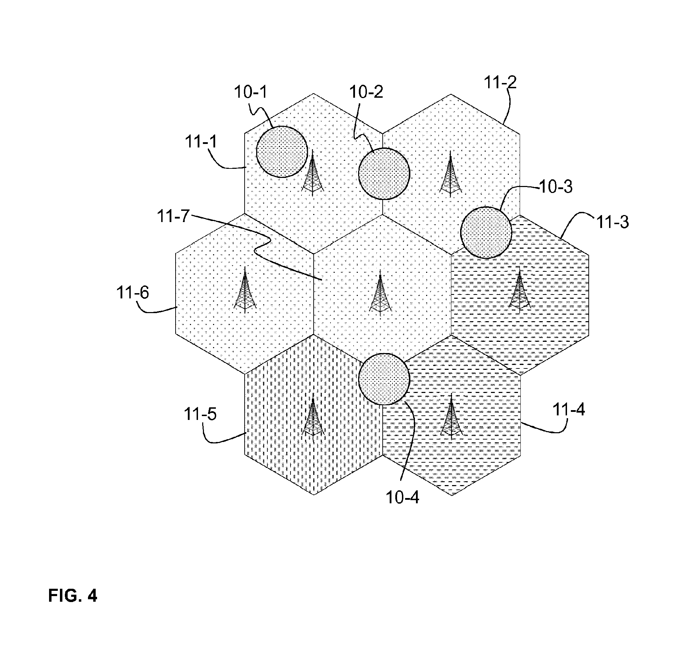

As described above, the unique energy-efficient network architecture brings with it that the maximum radius, and, therefore, the coverage area, of an SA-cell is typically much smaller than that of an LA-cell. Furthermore, a coverage area of an SA-cell may happen to be covered by one or more LA-cells. This is illustrated in FIG. 4 depicting SA-cells 10-1, 10-2, 10-3, and 10-4, and LA-cells 11-1, 11-2, 11-3, 11-4, 11-5, 11-6, and 11-7. The circular shapes used in the present application for depicting SA-cells and the hexagonal shapes used for depicting LA-cells, as is e.g. done in FIG. 4, are used for illustrative purposes only and are in no way representative of the actual shapes of the coverage areas provided by those cells.

For the situations when the coverage area of an SA-cell is covered by the coverage area of a single LA-cell, as is shown in FIG. 4 with the SA-cell 10-1, it is known which LA-cell the mobile terminal will camp on after the data session terminates (i.e. when transferring from an active to an idle mode). In the example shown in FIG. 4, that will be the LA-cell 11-1. However, when the coverage area of an SA-cell is covered by the coverage area of two or more LA-cells, as is shown in FIG. 4 for SA-cells 10-2, 10-3, and 10-4, it is not known with certainty on which LA-cell the mobile terminal will camp, when the data session terminates. In addition, if there are two or more LA-cells covering the SA-cell, then there might be situations where the LA-cells covering the SA-cell are even belonging to different routing areas, as is shown in FIG. 4 for the SA-cell 10-3 and the SA-cell 10-4.

What is needed in the art are methods and systems for facilitating efficient selection by an active mode terminal of an LA-cell to camp on when the terminal goes into an idle mode in an energy-efficient network, such as e.g. a BCG2 network.

### SUMMARY OF THE INVENTION

According to one aspect of the present invention, a wireless access telecommunications system comprising at least one SA-cell and a plurality of LA-cells, a method for a terminal to facilitate selection of an LA-cell to camp on when in an idle mode is disclosed. The method includes the step of, while the terminal is in an active mode having a wireless connection with the SA-cell, the terminal obtaining, via the wireless connection with the SA-cell, a set of configuration parameters of one or more LA-cells of the plurality of the LA-cells that are relevant for the SA-cell. The method further includes the step of the terminal selecting, out of the one or more LA-cells, one LA-cell to camp on, where the selection is performed based on the received set of the configuration parameters. Preferably, the telecommunications system comprises a cellular wireless access telecommunications system.

In the context of the embodiments of the present invention, the expressions "LA-cell" and "SA-cell" are used to differentiate between two different types of cells. The main differentiation is that SA-cells are cells optimized to support wireless exchange of data with terminals in an active mode, while LA-cells are cells optimized to support functions other than wireless exchange of data with terminals in an active mode. Additional differences between the SA-cells and the LA-cells are described below.

The first type of cell, the LA-cell (Large Area cell), refers to a cell that is able to cover a larger area with a smaller bit rate, as compared with the second type of cell. The LA-cell is primarily intended for carrying signaling messages from/to a terminal, e.g. the LA-cell is intended to at least be able to page a terminal. A terminal in idle mode may further be assumed to 'camp' on at least one of these LA-cells. While the LA-cell is not primarily intended to be used to carry wireless user data from/to a terminal, it is not precluded that other signaling than paging or that also some user data is carried via an LA-cell. In the intended coverage area of the wireless access network it may be assumed that at least one LA-cell is fully operational or, in other words, an LA-cell is 'normally on.'

The second type of cell, the SA-cell (Small Area cell), refers to a cell that is able to cover a smaller area with a higher bit rate, as compared with the LA-cell. The SA-cell is primarily intended to carry user data from/to a terminal over the established data connection (i.e., the SA-cell is primarily intended to handle connections with active terminals). Yet, it is not precluded that also some other information and/or some signalling is carried via an SA-cell. In the intended coverage area of the wireless access network it may be assumed that at least one SA-cell is able to provide coverage. An SA-cell is only fully operational when and to the extent that it is needed or, in other words, an SA-cell is 'normally off.'

According to various embodiments of the present invention, the SA-cells may occur in any mix of frequency bands and/or radio access technologies (RATs). It is also not precluded that there are differently sized SA-cells (e.g. macro, micro, pico and femto SA-cells, with or without a hierarchical organisation), where larger SA-cells may e.g. more efficiently serve highly mobile terminals.

As used herein, the expression "data connection between a terminal and an SA-cell" refers to a communication path for a wireless exchange of user data between the terminal and the SA-cell. The communication path for user data, including the section between the terminal and the SA-cell, is usually set up according to a set of parameters, for example, depending on what type of user data needs to be exchanged (e.g. for sending/receiving e-mail, for making a voice or video call, etc.). The set of parameters, commonly referred to in the art as "QoS parameters" or "QoS profile," may include parameters such as e.g. maximum bitrate, guaranteed (minimum) bitrate, bit error ratio and delay/latency.

In contrast, signalling messages exchanged between the terminal and the LA-cells do not contain user data and are exchanged between e.g. the terminal and various entities in the telecommunication system. Signalling messages may be exchanged without establishing a connection or via a "signalling connection" with a modest bit rate and with a quality sufficient for most signalling information to arrive uncorrupted. A signalling connection, when used, is to a large extent also independent of the parameters of the "data connection" it may be associated with.

Further, it is understood that the terms "user data" and "user terminal" do not necessarily imply a presence of a human user and the embodiments of the present invention may also be applicable to e.g. a smartphone checking e-mail without human intervention and to machine-to-machine (M2M) communications. The term "user data" is merely used to differentiate between the actual data that is to be exchange over the data connection and the signaling.

As described herein, a terminal may be either in an "active mode" or an "idle mode." As used herein, the expression "a terminal in an idle mode" refers to a terminal that is neither exchanging user data nor able to exchange user data but is camping on a LA-cell and is monitoring possible paging messages for the terminal from the LA-cell. In other words, the expression "a terminal in an idle mode" is used to describe a terminal which does not have support for the wireless exchange of user data between the terminal and an SA-cell. In contrast, the expression "a terminal in an active mode" refers to a terminal that is either exchanging user data or able to exchange user data via at least one SA-cell. In other words, an active terminal supports or is able to support the wireless exchange of user data between the terminal and the SA-cell(s). These notions of idle mode and active mode may be comparable with like notions in standardized conventional networks but do not necessarily coincide exactly with standardized definitions.

In an embodiment of the method, the set of configuration parameters includes, for at least one LA-cell of the one or more LA-cells, at least measurement configuration parameters for performing a measurement on each of the at least one LA-cell, the result of the measurement enabling the terminal to select the one LA-cell to camp on. Such measurement configuration parameters could e.g. include frequencies, synchronization codes, LA-cell transmit power, LA-cell cell identification (ID), LA-cell geographical location, LA-cell antenna parameters, or an indication of coordinates of the estimated geographical area covered by the LA-cell. In a further embodiment, the set of configuration parameters could further include, for each of at least one of the one or more LA-cells, one or more parameters indicative of a broadcast channel of the at least one LA-cell, one or more parameters indicative of a Random Access Channel of the at least one LA-cell, a routing area with which the at least one LA-cell is associated, a cell ID of the at least one LA-cell, and/or monitoring configuration parameters for monitoring at least a paging channel of the at least one LA-cell.

In various embodiments, the set of configuration parameters may be obtained following the terminal having established the wireless connection with the SA-cell, periodically during the wireless connection with the SA-cell, at predetermined times during the wireless connection with the SA-cell, following a handover of the wireless connection with the SA-cell from the SA-cell to a different SA-cell, and/or before the release or termination of the wireless connection with the SA-cell.

In an embodiment, when the one or more LA-cells comprise at least two LA-cells, the method further comprises the step of the terminal performing a measurement on at least one LA-cell for which the measurement configuration parameters were obtained using the obtained measurement configuration parameters for that LA-cell. The selection of the one LA-cell to camp on is then based on at least the result of the performed measurement on the at least one LA-cell for which the measurement configuration parameters were obtained. While, according to this embodiment, measurements are performed on at least one LA-cell for which the measurement configuration parameters were obtained, in other embodiments, of course, more measurements could be performed and more results obtained, but those do not have to be considered in the selection.

According to another aspect of the present invention, an SA-cell for use in the methods described herein is disclosed. The SA-cell is configured at least for providing to the terminal, while having a wireless connection with the terminal in the active mode, a set of configuration parameters of one or more LA-cells of the plurality of the LA-cells that are relevant for the SA-cell, the set of configuration parameters enabling the terminal to select one LA-cell out of the one or more LA-cells to camp on.

According to yet another aspect of the present invention, a terminal comprising means for performing the various functions described herein, in particular for performing the methods described herein, is disclosed. Such a terminal is further configured to camp on the selected one LA-cell. The terminal could, additionally, comprise memory means for storing the set of configuration parameters obtained via the SA-cell.

According to other aspects of the present invention, a computer program with portions (possibly distributed) for performing the various functions described herein, a data carrier for such software portions, non-transitory computer readable storage medium storing the computer program, and a telecommunications system are disclosed. The telecommunications system may include two or more of the terminal, the SA-cell, and any of the plurality of the LA-cells described herein.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 illustrates the need for re-selection of a cell to camp on when a terminal is moving;
FIG. 2 illustrates that, in a legacy network, both data and signalling transmissions occur between a terminal and a single cell;
FIG. 3 illustrates that, in an energy-efficient network, data transmission occur between a terminal and one cell (an SA-cell), while signalling transmission occurs between a terminal and another cell (an LA-cell);
FIG. 4 is a schematic illustration of coverage areas of LA-cells and SA-cells in an energy-efficient network;
FIG. 5 illustrates a telecommunication system according to one embodiment of the present invention;
FIG. 6 is a schematic illustration of an SA-cell radio interface and an LA-cell radio interface of a terminal being enabled simultaneously, according to one embodiment of the present invention;
FIG. 7 is a schematic illustration of an SA-cell radio interface and an LA-cell radio interface of a terminal being enabled alternatively in a time-multiplexing mode, according to another embodiment of the present invention;
FIGs. 8A and 8B set forth flow diagrams of method steps for a terminal to select an LA-cell to camp on when the terminal is configured with concurrent LA-cell and SA-cell radio interfaces and the network is pro-active, according to one embodiment of the present invention;
FIGs. 9A and 9B set forth flow diagrams of method steps for a terminal to select an LA-cell to camp on when the terminal is configured with concurrent LA-cell and SA-cell radio interfaces and the network is passive, according to one embodiment of the present invention;
FIGs. 10A and 10B set forth flow diagrams of method steps for a terminal to select an LA-cell to camp on when the terminal is configured with alternate LA-cell and SA-cell radio interfaces and the network is pro-active, according to one embodiment of the present invention; and
FIGs. 11A and 11B set forth flow diagrams of method steps for a terminal to select an LA-cell to camp on when the terminal is configured with alternate LA-cell and SA-cell radio interfaces and the network is passive, according to one embodiment of the present invention.

### DETAILED DESCRIPTION OF THE DRAWINGS

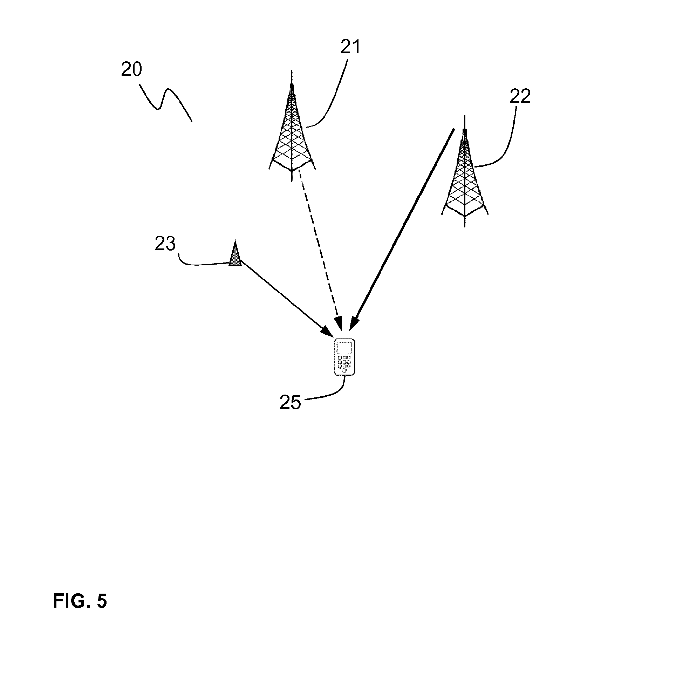

FIG. 5 illustrates a telecommunication system 20 according to one embodiment of the present invention. As shown, the telecommunication system 20, which is preferably a cellular wireless access telecommunication system, includes at least LA-cells 21 and 22 and an SA-cell 23. The telecommunication system 20 may further include at least a mobile management entity (MME) 24. FIG. 5 also illustrates a user terminal 25. For clarity reasons, only the most relevant elements of the telecommunication system are illustrated in FIG. 5. Other elements, not shown in FIG. 5, may also be present and are within the scope of the present invention. Such "other elements" may include e.g. additional SA-cells, additional LA-cells, additional terminals, further elements to the telecommunication system and the backhaul links connecting each cell with the telecommunication system and/or with each other.

Below, a general description of each of the LA-cells 21 and 22, the SA-cell 23, and the terminal 25 is provided. A more detailed description of the functionality of each of these elements is provided in the discussion of the different solutions, following the general description.

Each of the LA-cells 21 and 22 is an LA-cell cell configured to at least be able to enable terminal 25 to camp on LA-cell 21, 22 and to page the terminal 25 in a conventional manner known in the art. According to some embodiments of the present invention, the LA-cells 21, 22 are also configured to receive service request messages (SRMs) from the terminal 25 indicating that a data connection needs to be established between the terminal 25 and the SA-cell 23 for supporting wireless traffic (i.e. wireless exchange of user data), not shown in FIG 5. While the LA-cells 21, 22 are not primarily intended to be used to carry wireless user data from/to the terminal 25, it is not precluded that other signalling than paging or that also some user data traffic is carried via the LA-cells 21, 22, for example low bit rate traffic (such as a voice call) for the full duration or for a part of the duration of the data session (call).

In comparison with the SA-cell 23, each of the LA-cells 21, 22 are configured to cover a larger geographical area with a smaller bit rate. The geographical area where an idle terminal selects the LA cell to camp on is referred to as the coverage area of the LA-cell. In a properly dimensioned cell, a terminal within that area is usually also capable of successfully receiving the system information and signalling messages from the LA-cell (for example a paging message). This is assumed to also apply in the reverse direction, i.e. when a terminal, camping on an LA-cell, transmits a signalling message (for example a service request message) to the LA cell it is camping on, the LA cell is usually capable of successfully receiving the message. In the intended coverage area of the wireless access network it may be assumed that at least one LA-cell is fully operational or 'normally on' and is capable of supporting exchange of signalling messages with the terminals. In a simplest embodiment, this may mean that at least one of the LA cells 21, 22 is always fully functional ('on').

The terminal 25 may be a terminal operated by an actual human user, such as e.g. a mobile phone with which the user can make a voice call or browse the Internet, but may also be a smart phone or a blackberry operating without human intervention (e.g. sending/receiving e-mail), and may also be an M2M device, such as e.g. a smart electricity meter or a camera surveillance device.

The terminal 25 may be in an active mode or in an idle mode. As used herein, the terminal 25 is said to be in an idle mode while there is no support for a wireless exchange of user data or traffic between the terminal 25 and the SA-cell 23. As used herein, the terminal 25 is said to be in an active mode when it is able to exchange data with the SA-cell 23. Note that while these notions of idle mode and active mode may be comparable with the meaning of like terms in standardized conventional networks, as used herein, they do not necessarily coincide exactly with such standardized definitions.

Further, the terminal 25 may support some form of power-saving options (i.e., be in a power-save mode or in an operational mode, where the terminal consumes less power in the power-save mode than in the operational mode). Since the differentiation between power-save and operational modes is based on the amount of power consumed by the terminal, while the differentiation between idle and active modes is based on the presence of the support for wireless exchange of user data with the SA-cells, a terminal may e.g. be in the operational mode but still be an idle terminal (or the terminal in the operational mode may be in active mode). Similarly, a terminal in a power-save mode can be either active or idle, depending on whether the terminal supports wireless exchange of user data with at least one of the SA-cells. Most common, however, would be a situation where an idle terminal in a power-save mode "wakes up" (i.e. exits the power-save mode and enters the operational mode) to perform certain actions to facilitate establishment of a data connection with at least one SA-cell, after which the terminal becomes "active" (and operational). Since the embodiments of the present invention deal with a session termination for the terminal (i.e. termination of a data connection with the SA-cell 23), in the following description, the differentiation is mainly made between idle and active modes of the terminal. The terminal 25 in an idle mode may be assumed to 'camp' on one of the LA-cells 21, 22.

The SA-cell 23 is a cell primarily intended to carry user data traffic from/to the terminal 25 over the data connections established for that purpose. However, it is not precluded that also some other information and/or some signalling is carried via the SA-cell 23.

The SA-cell 23 is intended to be capable of covering smaller areas with a higher bit rate, as opposed to the LA-cells 21, 22. In a typical deployment scenario, the areas that can possibly be covered by nearby SA-cells may show a considerable overlap. In the intended coverage area of the wireless access network it may be assumed that at least the SA-cell 23 is able to provide coverage. An SA-cell is only fully operational when and to the extent that it is needed or, in other words, is 'normally off'. An SA-cell is assumed to support at least one form of power-saving, e.g. a power-save mode or stand-by mode.

Each of the terminal 25, the LA-cells 21 and 22, and the SA-cell 23 may include at least one or more of a processor, a memory unit, and a communications interface configured for carrying out functionalities of these units described herein.

Embodiments of the present invention relate to an energy-efficient network as described above. In particular, the embodiments focus on improving the procedure at data session termination. Therefore, in the context as illustrated in FIG. 5 and described above, the terminal 25 is first assumed to be an active mode terminal (i.e., a data session between the terminal 25 and the SA-cell 23 is ongoing), which terminal intends to become idle (i.e., the data session is about to close). After the data session is terminated, the terminal 25 is expected to resume to an idle mode, supported by one of the LA-cells on which the terminal 25 will select to camp on.

From the perspective of the terminal, a terminal terminating a data session (i.e. making a transition from an active mode to an idle mode) primarily needs to determine an LA-cell to camp on, which also implies that the terminal monitors that LA-cell's paging channel. In addition, the terminal also needs to determine whether or not the terminal should inform the network, e.g. a mobility management entity in the network, about the LA-cell that the terminal identified as the cell to camp on and/or about the associated routing area of that LA cell. Further, if the terminal determines that it should indeed inform the network, such a procedure, e.g. a routing area update, should be performed without undue delay in order to ensure that a paging message for the terminal is transmitted at least in the LA-cell that the terminal camps on.

From the perspective of the network, it is important that the BCG2 network mobility management entity has an up to date routing area registration of the mobile terminal when the mobile terminal camps, or resumes camping, on an LA-cell. The knowledge of the routing area where the mobile terminal is camping on as well as the up to date maintenance of it's routing area registration at the mobility management entity is important for paging purposes since the network should select the correct routing area where the paging message for the IDLE mobile is to be transmitted, e.g. via broadcast.

From the perspective of the network, different approaches may be considered. One approach is a passive approach where the network passively waits to be informed by the terminal about the LA-cell the terminal currently camps on and/or about the routing area associated with that LA-cell. Another approach is a more pro-active approach where the network performs additional functions in order to keep itself informed about in which LA-cell (or LA-cells) and/or in which associated routing area(s) the terminal will camp on if the data session is terminated, i.e. when the terminal makes a transition form an active mode to an idle mode.

As the network and the terminal cooperate, there is an interrelation, or dependency, between the two. From the terminal's perspective, the terminal may have less work to do and/or the terminal's reports may be less time-critical in a network operating according to a pro-active approach, compared to the terminal's tasks in a network operating according to a passive approach. From the network's perspective, the network may have more work to do and/or the network's operations may be more time-critical if a terminal is configured to provide a report to the network in fewer than all cases and/or if a terminal is configured, or only able, to provide a report to the network with a non-negligible delay, compared to the network's tasks where all terminals are configured and able to provide prompt reports to the network in all cases.

From the terminal's perspective, there are two configurations that the terminal 25 could take with respect to its' radio interfaces.

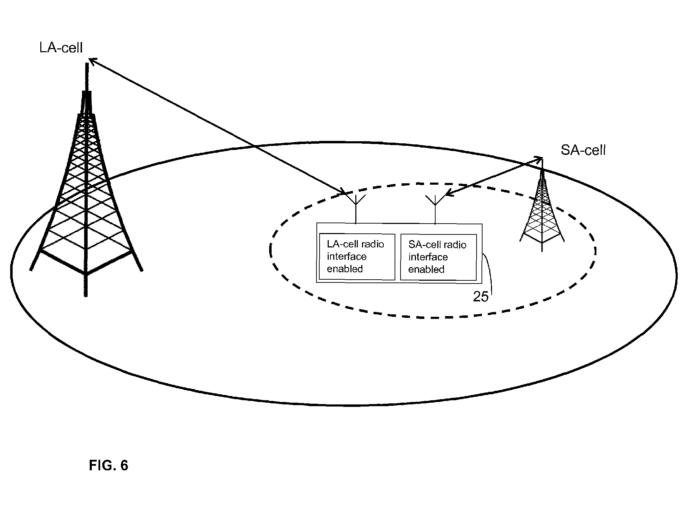

A first configuration for the terminal 25, illustrated in FIG. 6 and referred to in the following as "concurrent LA-cell and SA-cell interface" or "configuration (i)," envisages an active mode terminal to simultaneously support two radio interfaces - an LA-cell radio interface for communicating with the LA-cells 21 and 22 (and possibly other LA-cells not shown in FIG. 5) and an SA-cell radio interface for communicating with the SA-cell 23 (and possibly other SA-cells not shown in FIG. 5). As a person skilled in the art would recognize, this configuration involves some more complexity than a terminal with only a single radio interface. In at least some solutions, such a terminal needs only an LA-cell radio receiver so that the terminal can receive information from the LA-cell via the LA-cell radio interface but the terminal does not need to have capabilities to also transmit information to the LA-cell. In other solutions, such as e.g. for exchanging signalling information with an LA-cell, such a terminal also needs an LA-cell radio transmitter so that the terminal can transmit information to the LA-cell. The terminal 25 in the concurrent LA-cell and SA-cell configuration may, also in active mode, receive signals from and/or exchange data with the LA-cells 21, 22 at any time, and is therefore reachable for paging at incoming call all the time.

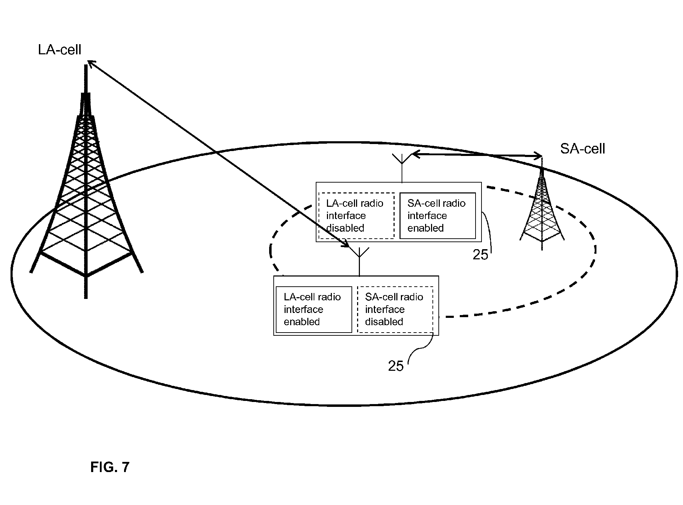

A second configuration for the terminal 25, illustrated in FIG. 7 and referred to in the following as "alternate LA-cell and SA-cell interface" or "configuration (ii)," envisages a terminal in the active mode to support two radio interfaces, an LA-cell radio interface for the LA-cell(s) and an SA-cell radio interface for the SA-cell(s), in quickly alternating mode of operation, i.e. operating in time division mode. In other words, such a terminal would have, at one moment, the LA-cell radio interface enabled and, at another moment, the SA-cell radio interface enabled, as illustrated in FIG. 7. When the terminal 25 in the alternate LA-cell and SA-cell interface configuration is in the active mode and actually exchanges data with the SA-cell 23 it is envisaged that the SA-cell radio interface is enabled for the larger part of the time. It is further preferred and envisaged that the exchange of data with the SA-cell is interrupted for only a brief period of time such that the interruption is not aggravating to the terminal user, e.g. less than a fraction of a second, such as up to few tens of milliseconds. A terminal in the alternate LA-cell and SA-cell interface configuration may, also in active mode, reconfigure its radio interface from the SA-cell radio interface to the LA-cell radio interface and then receive signals from and/or exchange data with any of the LA-cells at any time but only as agreed upon with the SA-cell and for a relatively brief period (e.g. up to few tens of ms) before restoring its radio interface configuration to the SA-cell radio interface. In this manner, a quasi-simultaneous mode of operation may be achieved where the terminal 25 and the SA-cell 23 transmitting user data to the terminal may be synchronized to one other to the extent that an SA-cell does not transmit user data to a particular terminal in the period that the terminal has configured its radio interface for receiving data from the LA-cells. This approach allows avoiding the SA-cell transmitting user data to the terminal in vain, wasting resources of the SA-cell. Further, occurrences of a terminal configuring its LA-cell radio interface, and thus being unable to use its SA-cell radio interface, need not be very frequent and the total time that the terminal has its LA-cell radio interface enabled may only comprise a relatively very small fraction of the total active time. The consequence of the "alternate LA-cell and SA-cell interface" configuration is that an active terminal may be unable to receive a paging message, such as e.g. related to an incoming call, via the LA-cell interface when it is engaged in data transmission/reception via the SA-cell interface.

The concurrent LA-cell and the SA-cell radio interface configuration requires two separate physical radio interfaces with separate RF front ends and with good RF isolation. This isolation is needed in order to prevent cross-talk, or cross-interference, between the transmitter of one interface and the receiver of the other interface, if both interfaces are simultaneously operated. This RF isolation is especially challenging to achieve if the LA-cell and SA-cell radio interface operate in a same frequency band.

The alternate LA-cell and SA-cell radio interface configuration allows for a single physical radio interface, which is either enabled as an LA-cell radio interface, while the SA-cell radio interface is disabled, or enabled as an SA-cell radio interface, while the LA-cell radio interface is disabled.

As used herein, the term "enabled" for a cell type (i.e., either an SA-cell type of an LA-cell type) in the context of SA-cell or LA-cell radio interfaces being enabled or disabled is used to describe that the interface is able to receive signals from the cell type and/or to support an exchange of data with the cell type, while the term "disabled" is used to describe that the interface is not able to receive signals from and/or not able to support such an exchange with the cell type. In this context, data may comprise any type of data such as e.g. user data, signalling data, or network control messages. A person skilled in the art will recognize that there are various manners in which an interface may be disabled. For example, in one extreme embodiment, the disabled radio interface could be a radio interface turned completely off, with no power supply being provided to the relevant part of the electronic components of the interface. In another extreme embodiment, however, the radio interface may be considered to be disabled when it is simply not being used even though the interface itself is physically completely up and running. The latter embodiment could be advantageous because the time needed to enable the interface again would be minimum since there would be no or minimum delay in getting the disabled interface ready for operation when it needs to be enabled again. Various other embodiments of how a radio interface could be considered to be disabled that are between these extreme embodiments would be known to a person skilled in the art and are intended to be within the coverage of the present invention. In various embodiments, the terms "enabled" and "disabled" may be used in context of an interface being partially enabled or disabled, e.g. an LA-cell radio interface of a terminal may be enabled at least for receiving data from LA-cells, but not necessarily for transmitting data.

The concurrent LA-cell and SA-cell radio interface configuration has the advantage that the terminal can always listen to and/or exchange messages with the LA-cell and can be reachable for incoming call paging all the time. The disadvantage of this configuration is a higher complexity of the terminal's RF front-end at least in that it requires two separate RF front-ends with good RF isolation between them. A further disadvantage for a terminal in an active mode is the additional battery drain for the terminal's LA-cell radio interface if that interface is up and running, even though it might not be used.

The alternate LA-cell and SA-cell radio interface configuration has the advantage that the RF front-end hardware is simpler, at least in that there is no need for physically separate RF front-ends and no need for good RF isolation between them. A further advantage for a terminal in an active mode is that there is no additional battery drain for the LA-cell radio interface. The disadvantage of this configuration is that, during a data session, the data communication with the SA-cell has to be interrupted in order to listen to and/or to exchange messages with the LA-cell. Consequently, this configuration may require some form of synchronization between the operations of either cell type. A further disadvantage is that reconfiguring the terminal's radio interface by disabling one radio interface and activating the other radio interface is expected to be not instantaneous but may take a non-negligible "switch-over" time, this time being dependent on a particular implementation. During the switch-over time no communication with either cell type is possible. Also, the terminal may miss information transmitted to it during the switch-over time, such as e.g. a paging message to the terminal.

In the following, solutions are described separately for the concurrent and for the alternate LA-cell and SA cell radio interface configurations. The solutions also aim to reduce the disadvantages associated with the particular radio interface configuration. For example, the solutions for the "alternate" radio interface configuration specifically aim to reduce the risk that the terminal is not reachable by the network (e.g. with a paging message) after a data session supported via an SA-cell has been terminated. The solutions further differentiate between pro-active network and passive network approaches described above.

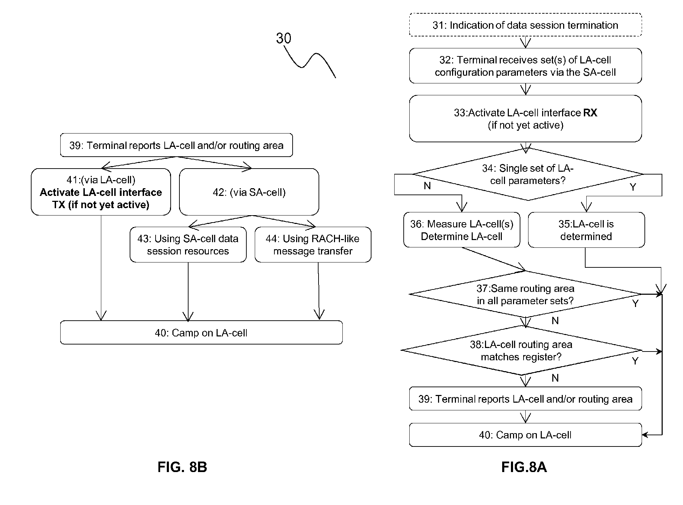

FIGs. 8A and 8B set forth flow diagrams of method steps 30 for the terminal 25 to select an LA-cell to camp on when the terminal is configured with concurrent LA-cell and SA-cell radio interfaces and the network is pro-active, according to one embodiment of the present invention. While the method steps are described in conjunction with the telecommunication system shown in FIG. 5, persons skilled in the art will recognize that any system configured to perform the method steps, in any order, is within the scope of the present invention.

The starting point for describing the solution is the BCG2 terminal 25 in an active mode, i.e. the BCG2 terminal with an ongoing data session served by at least one SA-cell, e.g. the SA-cell 23. Consequently, at least the terminal's SA-cell radio interface is enabled and being used. Even though this configuration allows concurrent use of the LA-cell and SA-cell radio interfaces, it may nevertheless be beneficial that the LA-cell radio interface is not actually been used during at least part of the time when the Sa-cell radio interface is enabled and being used. The LA-cell radio interface may then be in a dormant, i.e. standby, state or may be operational but idling, e.g. when the input signals are not fully processed. Even though the terminal 25 in the method 30 supports concurrent use of both radio interfaces, battery power consumption may be saved from using such dormant or idling state.

Further starting point for the method 30 is that the data session is about to close and the terminal 25 is then expected to revert to an idle mode, camping on a suitable LA-cell.

The method 30 may begin with an optional step 31, where the terminal 25 receives an indication that the data session is about to close. In various embodiments, the terminal 25 may receive from the wireless network such an indication via the SA-cell. For example, a terminal or the network can indicate that the last data packet, from a data session, in the buffer is transmitted, or that a voice call is ended, etc. Consequently, a wireless communication session release procedure is initiated between the SA-cell and the terminal, which corresponds to the session termination indication in step 31.

In step 32, which takes place not later then when a data session between the terminal 25 and the SA-cell 23 is about to be closed, the network, via the SA-cell bearer, provides the terminal 31 with a set of configuration parameters of one or more LA-cells that are relevant to the SA-cell, e.g. the SA-cell 23 transmits the parameters to the terminal 25. In this context, an LA-cell is considered "relevant" to the SA-cell if at least one of the active terminals served by the SA-cell can successfully receive or transmit information wirelessly via that particular LA-cell.

In a preferred embodiment, the terminal 25 obtains the parameters in step 32 earlier than when a data session is about to close, for example when establishing a wireless connection with the SA-cell 23, i.e. when establishing a data session, and after each handover to a different SA-cell. In an embodiment, as a part of step 32 or following step 32, the terminal 25 may store the received set of parameters.

The configuration parameters at least include measurement configuration parameters suitable to perform measurements on the LA-cells in order to determine an LA-cell for the terminal to camp on. Such measurement configuration parameters could e.g. include frequencies, synchronization codes, LA-cell transmit power, cell ID, etc. The configuration parameters could also include parameters suitable for starting to monitor at least the LA-cell paging channel (e.g. frequencies, synchronisation codes, paging channel configuration, system information configuration, etc.). The configuration parameters may also include additional configuration parameters not directly needed to perform the measurements, such as information about the LA-cell's broadcast channel, about the LA-cell's RACH channel, about the routing area with which the LA-cell is associated, the LA-cell's neighbour cell list, etc. The type of configuration parameters may differ depending on the radio access technology of an LA-cell. Further, the configuration parameters could also include reference numbers for the LA-cells, e.g. to support easy reconciliation by the network of a later response from the terminal to the message(s) transmitted to the terminal comprising the parameters.

An advantage of providing the terminal 25 with configuration parameters via the SA-cell 23, i.e. via the wireless data connection established to support the data session with the SA-cell, is that the information can be provided to the terminal much quicker and much more energy-efficient compared to if such information would be obtained from a cell's system information broadcasted by the cell. An advantage of providing the terminal 25 with LA-cell measurement configuration parameters is that it enables the terminal, when needed, to find and to select a suitable LA-cell in much shorter a time compared to a regular LA cell selection which would comprise a complete cell search procedure also including decoding of system information, reception of neighbour cell lists, etc. In addition, it allows the terminal to start monitoring the selected LA-cell's paging channel quicker, because additional decoding of system information, reception of paging channel configuration, etc. is no longer necessary. Because the coverage area of an SA-cell is expected to be much smaller than the coverage of an LA-cell, in most cases the network, via the SA-cell 23, provides configuration parameters to the terminal 25 for only a single LA-cell. In fewer cases, when two or more LA-cells are relevant to the SA-cell 23, the network, via the SA-cell 23, sends the configuration parameters to the terminal for the corresponding set of two or more LA-cells. In all cases, the set of LA-cells for which measurement configuration parameters are provided is expected to be considerably smaller than the number of neighbour cells in a typical neighbour cell list. Obtaining information for fewer LA-cells also further contributes to a quicker and a more energy-efficient transport of the information, in addition to a quicker and more energy-efficient resolution by the terminal of a suitable LA-cell to camp on.

The method then proceeds to step 33, where the terminal activates, at least for receiving, its LA-cell radio interface, if the interface was not already active.

In step 34, the terminal 25 determines if only a single set of LA-cell configuration parameters was received (i.e., the parameters only for a single LA-cell). If the terminal received measurement configuration parameters for only a single LA-cell, the terminal selects that single LA-cell is the LA-cell to camp on (step 35) and skips step 36. Since FIGs.8A and 8B relate to the pro-active network approach, where no routing area update is needed because the network knows the LA-cell, and thus also the routing area, the terminal 25 may also skip steps 37-39 and proceed to step 40, where the terminal camps on the selected LA-cell and starts monitoring the paging channel of that LA-cell. In other words, if the network, e.g. the SA-cell or an SA-cell mobility management entity, is configured to inform the mobility management entity in the network about the LA-cell and/or about the associated routing area, then the terminal may refrain from performing a routing area update, register the routing area associated with the LA-cell in the terminal and proceed to camp on the selected LA-cell (step 40).

If, in step 34, it was determined that the terminal received measurement configuration parameters for more than a single LA-cell, then the terminal needs to determine which of the specified LA-cells is a suitable LA-cell to camp on and may also need to determine the routing area associated with the selected LA-cell. To that end, the terminal 25 proceeds to step 36, described below.

In step 36, the terminal 25, after having received the LA-cell configuration parameters, possibly still during the yet-to-be terminated data session, activates its LA-cell radio interface, if needed, and performs the LA-cell measurements according to the received LA-cell measurement configuration parameters to determine a suitable LA-cell to camp on. In an embodiment, the terminal 25 may be configured to determine not only a "suitable", but "the best" LA-cell to camp on. However, determining a suitable LA-cell, e.g. a cell which signals the terminal receives with sufficient power or for which the terminal determines that the path loss is below a threshold value, may be quicker than determining the best LA-cell, because the measurements need not be performed for all of the cells in the set of LA-cells for which configuration parameters were received. Of course, after camping on a suitable cell, the terminal may continue performing measurements and re-selecting a different cell in a conventional way. After having performed one or more measurements, still as a part of step 36, the terminal 25 selects an LA-cell to camp on, which could be the best or only a sufficiently suitable LA-cell to camp on. For a later report to the network, the selected LA-cell need only be determined as far as to distinguish between the LA-cells comprised in the received set of LA-cell measurement configuration parameters. For example, the terminal may not need to derive the Cell-ID of the selected LA-cell, which would require decoding the corresponding system information. It may suffice to uniquely identify the selected LA-cell within the provided set of LA-cells, e.g. via the pair (frequency, code) depending on LA-cell's RAT or simply by the sequence number in the set of LA-cells as received from the network, e.g. LA-cell number 2 in the received set.

After the terminal 25 selected the LA-cell to camp on, the method proceeds to steps 37 and 38, where the terminal determines whether a routing area update is to be performed.

In step 37, the terminal determines whether the routing areas associated with the LA-cells for which parameters were received in step 32 are the same. If so, then the terminal 25 may deduce that also the network is able to determine the routing area, even though not the LA-cell that the terminal selected to camp on. Hence, if the network, e.g. the SA-cell or an SA-cell mobility management entity, is configured to inform the mobility management entity in the network about the LA-cells and/or about the associated routing area provided to the terminal or inform the mobility management entity about the routing area, as is the case with the pro-active network, then the terminal 25 may refrain from performing a routing area update, register the routing area associated with the LA-cells in the terminal and may proceed to step 40 where it camps on the selected LA-cell.

If, in step 37, the terminal determines that not all LA-cells for which configuration parameters were received are associated with the same routing area, then the method proceeds to step 38 where the terminal 25 determines whether the routing area of the selected LA-cell matches the routing area registered by the terminal. In case the terminal determines that the selected LA-cell is associated with the same routing area as registered by the terminal, possibly intermediately updated as described in the preferred option for step 32, then the terminal may refrain from reporting, i.e. the terminal may skip step 39 and proceed to camping on the selected LA-cell (step 40).

As described in the background section, the routing area registered by the network and by the terminal should correspond to each other. To facilitate such correspondence and also to cope with possible different network configurations with respect to pro-active and passive network behaviour, in an embodiment, the network informs the terminal about the routing area that is registered by network or is to be registered by the network, e.g. if the SA-cell has not yet informed the mobility management entity in the network. This may be done e.g. together with providing the terminal with set(s) of LA-cell configuration parameters (step 32), via the wireless data connection with the SA-cell. The terminal may then be configured to copy this information in its routing area register. Different from conventional networks, in a BCG2 network, such routing area information may also indicate e.g. 'unknown', 'void' or 'blank' to indicate that the routing area as registered by the network is unknown. In such a configuration, the terminal only needs to determine whether the routing area associated with the selected LA-cell corresponds to the routing area registered by the terminal. Thus, the above two cases of determination (the determination of 'single LA-cell' in step 34 and the determination of 'same routing area for all LA-cells' in step 37) need not be performed and only a single determination suffices which based on the information obtained by the terminal from the network via the SA-cell.

Otherwise, in case that in step 38 the terminal 25 determines that the routing area associated with the selected LA-cell does not correspond to the routing area registered by the terminal, including a registration by the terminal as 'unknown', 'void' or 'blank', then the method proceeds to step 39 where the terminal reports an indication of the selected LA-cell and/or an indication of that LA-cell's routing area to the network. As previously described herein, for this report to the network, the selected LA-cell needs only be identified in a manner that allows the network to uniquely distinguish between the LA-cells for which the LA-cell measurement configuration parameters were provided, e.g. via the pair (frequency, code) depending on LA-cell's RAT or simply by the sequence number in the set of LA-cells as received from the network, e.g. LA-cell number 2 in the received set.

FIG. 8B illustrates two alternative routes for transmitting the report to the network in step 39. The route actually used by a particular terminal may be configured in the network on a (semi-)-permanent basis or may be instructed by the network when providing the configuration parameters in step 32.

According to the first route, as shown in FIG. 8B with step 41, the terminal 25 reports the selected LA-cell via the selected cell itself, similar to the case of a conventional routing area update. To that end, if LA-cell radio interface is not yet active for transmission, then it first needs to be activated, at least for transmission.

Because the LA-cell being reported is implicit from fact that a particular LA-cell is addressed, in this case the report does not need to include any further indication of the selected LA-cell or routing area. In such a case, it suffices that the report comprises an indication that the report relates to the indication of the selected LA-cell or routing area and an indication of the terminal submitting the report. The indication of the terminal could e.g. be an indication of a terminal identity and/or of a reference number provided by the network, as was described above. The reporting selected LA-cell then attaches its LA-cell identity and forwards the report to the mobility management entity in the network.

Because no signalling connection exists between the terminal and the reporting LA-cell, first a procedure should be followed to establish a signalling connection via which information may be exchanged between the terminal and the LA-cell, e.g. a RACH procedure. However, because the amount of data to be transmitted from the terminal to the LA-cell is expected to be very small, in a preferred embodiment, all the information is contained in a RACH-like message itself or in several such messages. In this way the latency and signalling overhead of establishing a complete signalling connection just to send the small report may be avoided. In order to allow the RACH-like message to be transferred quickly, a priority RACH channel or a procedure comparable to contention-free RACH access (such as, for example, known from LTE and specified in the 3GPP standard) may be used, for which procedure the terminal may have received the relevant parameters in the configuration parameters received in step 32.

According to the other route, the terminal may report the selected LA-cell via the SA-cell that previously supported the data session with the terminal, as shown with step 42 in FIG. 8B. In this case, in contrast to the first route, there is no need to switch radio interfaces. There may further be two alternative ways for transmitting the report via the SA-cell. The way actually used by the terminal may be configured in the network on a (semi-)permanent basis, may be instructed by the network when providing the configuration parameters in step 32, or may be left to the terminal's discretion.

One way for transmitting the report to the SA-cell, shown with step 43 in FIG. 8B, is to use the SA-cell resources used for data transfers. If the data session has not yet been terminated, the resources for transmitting the report are preferably the same resources as used for that data session or a reduced set of those resources. The data session, or at least the availability of resources for transmitting the report, may be prolonged for a while after the exchange of user data in the data session has been terminated. If the data session has been terminated, the resources for transmitting the report may also be the same resources as used for the terminated data session, a reduced version of those resources or separate resources assigned for the purpose.

In particular when the data session has been terminated and the associated resources may be no longer available to the terminal, an alternative way is for transmitting the report to the SA-cell, shown with step 44 in FIG. 8B, is to use a RACH-like message transfer to the SA-cell. In this case, the same considerations, mutatis mutandis, apply as described above for using a RACH-like message to the LA-cell in the first route (step 41).

After transmitting the report to the SA-cell, possibly also receiving an acknowledgement, the terminal 25 no longer needs to support a data session and no longer needs to exchange information with the SA-cell 23 and, therefore, may de-activate the SA-cell radio interface.

The network, when it receives, from the terminal 25, a report in one of the manners described above, forwards the report, possibly augmented with additional information, such as e.g. cell identity or time stamp, to the mobility management entity within the network. The mobility management entity can then determine to which terminal and to which LA-cell and/or to which routing area the report relates and make the necessary update to its mobility database.

In step 40, the terminal 25 camps on the selected LA-cell as usual. Thus, the transition from active to idle mode has been completed such that the network, in particular the mobility management entity, is informed about the routing area in which the terminal is located.

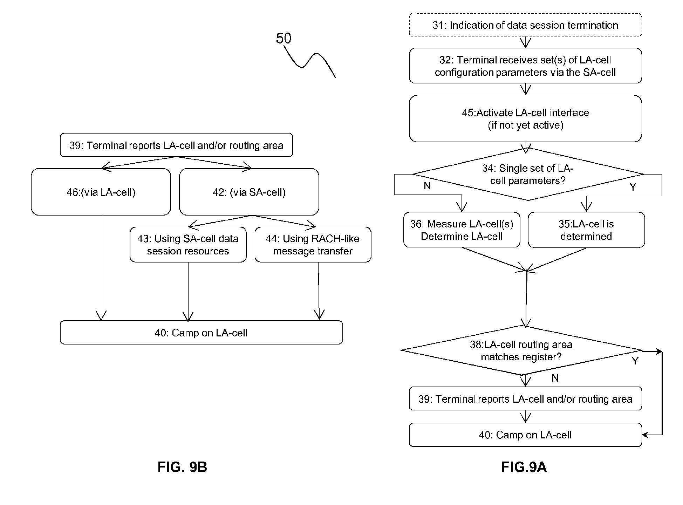

FIGs. 9A and 9B set forth flow diagrams of method steps 50 for a terminal to select an LA-cell to camp on when the terminal is configured with concurrent LA-cell and SA-cell radio interfaces and the network is passive, according to one embodiment of the present invention. Steps of FIG.s 9A and 9B that have the same numeral references as those illustrated in FIGs. 8A and 8B are intended to represent the same steps as described above with reference to FIGs. 8A and 8B. Therefore, in the interests of brevity, the description of these steps is not repeated here because the description of these steps and the associated discussions above are assumed to be applicable to FIGs. 9A and 9B, unless some differences are explicitly described.

One difference between FIGs. 9A/9B and FIGs. 8A/8B is that step 33 of FIG. 8A is replaced with step 45 in FIG. 9A. Step 45 is substantially the same as step 33, except that the LA-cell interface is activated not only "at least for receiving", but also for transmitting. Similarly, step 41 of FIG. 8A is replaced with step 46 in FIG. 9B. Step 46 is substantially the same as step 41, except that the LA-cell interface is activated not only "at least for transmitting", but also for receiving.

Another difference is that, following steps 34 and 35, i.e. when the terminal 25 determines that only a single set of LA-cell configuration parameters was received and recognizes that the single LA-cell is the LA-cell to camp on, according to the passive network approach of FIG. 9A, the terminal only skips step 36, but then proceeds to step 38, instead of immediately proceeding to camping on the selected single LA-cell.

In general, the differences between the pro-active and passive network approaches may be summarized as follows.

In the above descriptions, the terminal is provided, via the serving SA-cell, with sets of configuration parameters about one or more relevant LA-cells. This information may be derived from a database in the SA-cell itself or may be derived from a more centralised data base, e.g. associated with a SA-cell mobility management entity handling the terminal mobility for terminals in an active mode. In the particular case that a single LA-cell is relevant to the SA-cell, it is advantageous that, the network (e.g. the serving SA-cell or the SA-cell mobility management entity) informs the LA-cell mobility management entity about the LA-cell and/or about the routing area associated with the LA-cell, together with an identification of the terminal to which such a 'network-based routing area update' is related. This allows the mobility management entity in the network to be updated quicker. In the further particular case that multiple LA-cells are relevant to the SA-cell, but the same routing area is associated with each of the LA-cells for which the terminal is provided with LA-cell configuration parameters sets, it is advantageous that, the network (e.g. the serving SA-cell or the SA-cell mobility management entity) informs the LA-cell mobility management entity about the routing area associated with the LA-cells, together with an identification of the terminal to which such a 'network-based routing area update' is related. This allows the mobility management entity in the network to be updated quicker. A network configured to perform either or both the above-described operations is referred to herein as a pro-active network, performing a network-based routing area update not found in conventional networks. Conventional networks follow a more passive approach, where the network passively waits until a terminal actually performs a routing area update. In a pro-active network configuration, the network updates the routing area register in the network. If used, the terminal should be configured to perform a corresponding update to the routing area register in the terminal. Thus, network and terminal should be correspondingly configured to achieve that the network's and the terminal's routing area register correspond to each other. A further improvement of the pro-active network is that such a network can inform the terminal about the update that has been or will be made to network's routing area register for that terminal (not shown in the FIGs). Such information may be provided via the same way as, and possibly together with, the LA-cell configuration parameters provided to the terminal. The terminal may then store the obtained routing area information in its routing area register. In this manner, the network's and the terminal's routing area register correspond to each other. Further, this eliminates the need for a corresponding configuration of terminal and network as the correspondence between the network's and the terminal's registers is ensured regardless how "pro-active" or how "passive" a particular part of the network may be configured. Even further, this eliminates the need to distinguish the above-described two cases and still provides the advantage of preventing unnecessary routing area updates. The terminal, having to determine whether a routing area update is to be performed, only needs to determine whether the routing area associated with the selected LA-cell corresponds with the routing area registered by the terminal. A routing area update is then to be performed only if these do not correspond to each other. Since the routing area information provided by the network to the terminal may also indicate a status as e.g. 'unknown', 'void' or 'blank' to indicate that the routing area as registered by the network is unknown, a terminal, finding such a status in its routing area register, should conclude to performing a routing area update. Also it should be noted that the routing area information provided by the network to the terminal may indicate more than a single routing area identifier, e.g. a list routing area identifiers, to indicate that the routing area as registered by the network is larger than the area corresponding to a single routing area identifier. A terminal, finding such a status in its routing area register, may conclude to performing a routing area update or may conclude to not performing a routing area update, depending on the network configuration. In a first example, if the network is configured to work typically with a routing area indicated by a single routing area identifier instead of with a list of such identifiers, and if the routing area identifier associated with the selected LA-cell matches one of the identifiers in its routing area register, the terminal may conclude to still perform a routing area update to inform the network more precisely about the, e.g. single, identifier of the routing area where the terminal is located in. In a second example, if the network is configured to work typically with a routing area indicated by a list of routing area identifiers (not excluding a list comprising only a single identifier), and if the routing area identifier associated with the selected LA-cell matches one of the identifiers in its routing area register, the terminal may conclude to not perform a routing area update, but to interpret the multiple routing area identifiers in the terminal's register as to indicate the routing area.

A further advantage of the implementations described in FIGs. 8A and 8B and FIGs. 9A and 9B is that the option of, during a data session via an SA-cell, not activating the LA-cell radio interface receiver or keeping it in a dormant or stand-by state and not performing LA-cell measurements saves the terminal battery power.

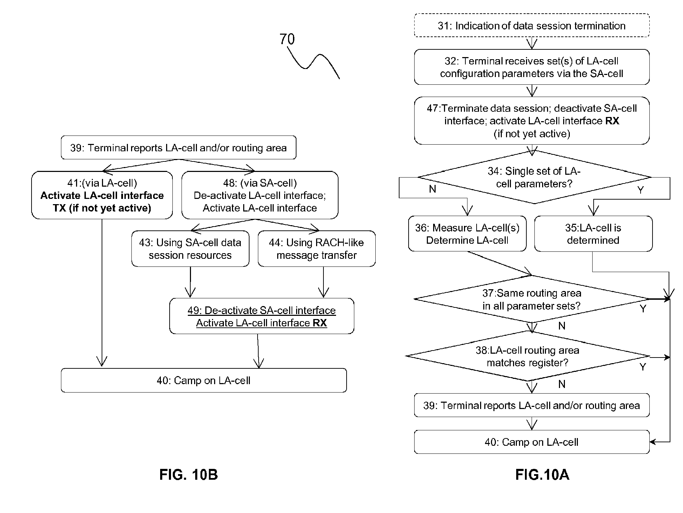

FIGs. 10A and 10B set forth flow diagrams of method steps 70 for the terminal 25 to select an LA-cell to camp on when the terminal is configured with alternate LA-cell and SA-cell radio interfaces and the network is pro-active, according to one embodiment of the present invention. Steps of FIG.s 10A and 10B that have the same numeral references as those illustrated in FIGs. 8A and 8B are intended to represent the same steps as described above with reference to FIGs. 8A and 8B. Therefore, in the interests of brevity, the description of these steps is not repeated here because the description of these steps and the associated discussions above are assumed to be applicable to FIGs. 10A and 10B, unless some differences are explicitly described.

Besides the similarities, there are also differences between FIGs. 10A/10B and FIGs. 8A/8B, as described below.

The starting point for describing the solution of FIGs. 10A and 10B is a BCG2 terminal in an active mode, i.e. the terminal 25 with an ongoing data session served by at least one SA-cell, SA cell 23, the same as with the solution of FIGs. 8A and 8B. However, in the configuration of FIGs. 10A and 10B, allowing only alternate use of the radio interfaces, only the terminal's SA-cell radio interface is initially enabled and being used. This difference results in step 33 of FIG. 8A being replaced with step 47 in FIG. 10A, where, after having received the LA-cell configuration parameters in step 32, the terminal not only activates the LA-cell radio interface, at least for receiving, but also terminates the data session and deactivates the SA-cell radio interface. In turn, the difference in step 47 causes the step 42 of FIG. 8B to have to be replaced with a different step, step 48, in FIG. 10B. In order for the terminal 25 to report the selected LA-cell via the SA-cell that previously supported the data session in step 48, the terminal needs to de-activate the LA-cell radio interface and to activate the SA-cell radio interface again. Consequently, FIG. 10B includes an additional step 49, not present in FIG. 8B, where, after transmitting the report to the SA-cell, possibly also receiving an acknowledgement, the terminal 25 de-activates the SA-cell radio interface and activates the LA-cell radio interface, at least for receiving. After that the terminal may proceed to step 40 where the terminal camps on the selected LA-cell.

There is an additional difference in the solution for the alternate radio interface, not shown in the drawings. As was previously described in association with step 43 of FIG. 8B, one approach to transmitting the report to the SA-cell is for the terminal 25 to use the SA-cell resources used for data transfers. This step is also present in FIG. 10B, however, in the alternate radio interface configuration, this approach is referred to as "Compressed mode session termination". Similar to the compressed mode in conventional networks, e.g. in UMTS to allow measurements on GSM cells to be performed, in step 43 of FIG. 10B the SA-cell radio interface may be interrupted for a specified period of time (gap) before resuming its operation, where the measurement gap for the compressed mode session release is agreed upon session termination triggering.

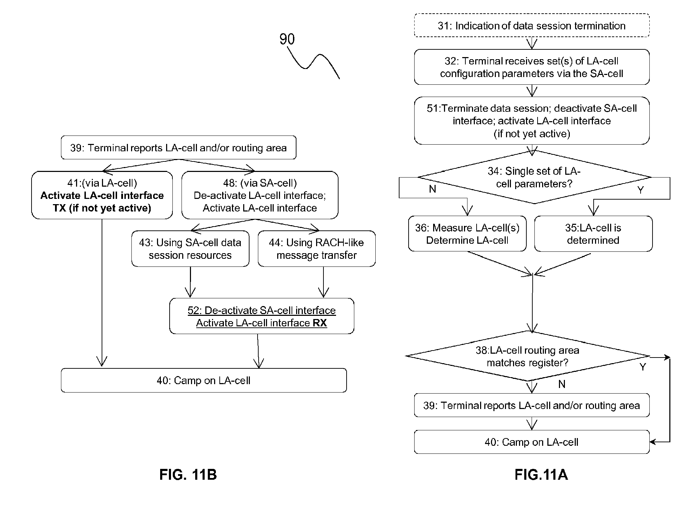

FIGs. 11A and 11B set forth flow diagrams of method steps 90 for the terminal 25 to select an LA-cell to camp on when the terminal is configured with alternate LA-cell and SA-cell radio interfaces and the network is passive, according to one embodiment of the present invention. Steps of FIG.s 11A and 11B that have the same numeral references as those illustrated in FIGs. 10A and 10B are intended to represent the same steps as in FIGs. 10A and 10B. Therefore, in the interests of brevity, the description of these steps is not repeated here because the description of these steps and the associated discussions above are assumed to be applicable to FIGs. 11A and 11B, unless some differences are explicitly described.

One difference between FIGs. 11A/11B and FIGs. 10A/10B is that step 47 of FIG. 10A is replaced with step 51 in FIG. 11A. Step 51 is substantially the same as step 47, except that the LA-cell interface is activated not only "at least for receiving", but also for transmitting. Similarly, step 49 of FIG. 10A is replaced with step 52 in FIG. 11B. Step 52 is substantially the same as step 49, except that the LA-cell interface is activated not only "at least for receiving", but also for transmitting.

Another difference is that, following steps 34 and 35, i.e. when the terminal 25 determines that only a single set of LA-cell configuration parameters was received and recognizes that the single LA-cell is the LA-cell to camp on, according to the passive network approach of FIG. 10A, the terminal only skips step 36, but then proceeds to step 38, instead of immediately proceeding to camping on the selected single LA-cell.

The general differences between the pro-active and passive network approaches described above following the description of the differences between FIGs. 8A/8B and FIGs. 9A/9B also apply to the differences between FIGs. 10A/10B and FIGs. 11A/11B, and, therefore, are not repeated here.

A further advantage of the implementations described in FIGs. 10A and 10B and FIGs. 11A and 11B is that, deactivating the LA-cell radio interface during a data session via an SA-cell, and, consequently, not performing LA-cell measurements, saves the terminal battery power.

In an embodiment of all of the implementations described above, i.e. for both concurrent and alternate radio interface configurations, the terminal 25 may be provided more often, during the data session, with LA-cell configuration parameters as described above for step 32, rather than only when the data session is about to close. For example, the terminal may obtain the parameters at data session set-up and/or at handover of the data session to a new serving SA-cell. In this manner, the terminal 25 may be kept up-to-date about the configuration parameters of relevant LA-cell(s), also when a data/signalling session via an SA-cell is unexpectedly lost. When this would happen, the terminal already has the configuration information about relevant LA-cells, which also may help to quickly establish contact with the network via an LA-cell and re-establish the data/signalling session with a suitable SA-cell, e.g. following the applicable data session set-up or a data session recovery procedure. This option allows for a trade-off between, on one hand, improved robustness and quick recovery from failures at the cost of some increased signalling traffic via an SA-cell, and, on the other hand, the lack of increased robustness and slower recovery from failures and no cost of increased signalling traffic.

One further advantage applicable to all of the implementations described above, i.e. for both concurrent and alternate radio interface configurations, is that the exchange of information via an SA-cell bearer is more energy-efficient for the terminal than via an LA-cell because the distance to the LA-cell is typically larger than that to the SA-cell and bridging larger distances requires more power. In the downlink direction, this relates to conveying the configuration parameters (step 32). In the uplink direction, this relates to transmitting the report via the SA-cell route (steps 42 and 48). Furthermore, the exchange of information via an SA-cell bearer can be performed quicker because of (i) lower latency, in particular if no RACH procedure or RACH-like message is used in the uplink direction, and (ii) a higher bit rate used. Yet another advantage applicable to all implementations described herein, is that not transmitting LA-cell signals during a data session with an SA-cell reduces cross-talk with SA-cell signals received by, or transmitted from, the terminal.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processing unit(s) described herein.

## Claims

1. In a wireless access telecommunications system comprising at least one SA-cell and a plurality of LA-cells, a method for a terminal to facilitate selection of an LA-cell to camp on when in an idle mode, the method comprising:
while the terminal is in an active mode having a wireless connection with the SA-cell, the terminal obtaining, via the wireless connection with the SA-cell, a set of configuration parameters of one or more LA-cells of the plurality of the LA-cells that are relevant for the SA-cell; and
based on the received set of configuration parameters, the terminal selecting, out of the one or more LA-cells, one LA-cell to camp on.

2. The method according to claim 1, wherein the set of configuration parameters includes, for at least one LA-cell of the one or more LA-cells, at least measurement configuration parameters for performing a measurement on each of the at least one LA-cell, the result of the measurement enabling the terminal to select the one LA-cell to camp on.

3. The method according to claims 1 or 2, wherein when the one or more LA-cells comprise only one LA-cell, the step of the terminal selecting, out of the one or more LA-cells, one LA-cell to camp on, comprises the terminal selecting the only one LA-cell.

4. The method according to claim 2,
wherein, when the one or more LA-cells comprise at least two LA-cells, the method further comprises the step of the terminal performing a measurement on at least one LA-cell for which the measurement configuration parameters were obtained using the obtained measurement configuration parameters for that LA-cell, and
wherein the selection of the one LA-cell to camp on is based on at least the result of the performed measurement on the at least one LA-cell for which the measurement configuration parameters were obtained.

5. The method according to claim 4, further comprising the step of activating, at least for receiving, an LA-cell radio interface of the terminal prior to performing the measurement on the at least one of the at least one LA-cell for which the measurement configuration parameters were obtained, wherein measurement on the at least one of the at least one LA-cell for which the measurement configuration parameters were obtained are performed via the activated LA-cell radio interface.

6. The method according to claim 5, further comprising the step of terminating the wireless connection with the SA-cell prior to activating the LA-cell radio interface of the terminal.

7. The method according to any one of claims 1-6, further comprising determining whether a routing area associated with the selected one LA-cell matches a routing area registered by the terminal as being the routing area registered for the terminal with a mobility management entity within the system.

8. The method according to claim 7, wherein the step of determining whether the routing area associated with the selected one LA-cell matches the routing area registered by the terminal as being the routing area registered for the terminal with the mobility management entity within the system is performed when the one or more LA-cells comprise at least two LA-cells, the at least two LA-cells being associated with different routing areas.

9. The method according to claim 7 or 8, further comprising the terminal reporting to the mobility management entity within the system one or more of an indication of the selected one LA-cell, an indication of the routing area associated with the selected one LA-cell, and an indication of an identity of the terminal.

10. The method according to claim 9, wherein the indication of the selected one LA-cell, the indication of the routing area associated with the selected one LA-cell, and/or the indication of the identity of the terminal is reported via the selected one LA-cell.

11. The method according to claim 9, wherein the indication of the selected one LA-cell, the indication of the routing area associated with the selected one LA-cell, and/or the indication of the identity of the terminal is reported via the SA-cell.

12. The method according to claim 11, wherein the indication of the selected one LA-cell, the indication of the routing area associated with the selected one LA-cell, and/or the indication of the terminal identity is reported via channel configured as a Random Access Channel.

13. The method according to claim 11, wherein the indication of the selected one LA-cell, the indication of the routing area associated with the selected one LA-cell, and/or the indication of the terminal identity is reported via the wireless connection with the SA-cell.

14. The method according to any one of claims 11-13, wherein, if the SA-cell radio interface of the terminal has been deactivated, at least for transmitting, the method further comprises the step of activating, at least for transmitting, the SA-cell radio interface prior to reporting the indication of the selected one LA-cell, the indication of the routing area associated with the selected one LA-cell, and/or the indication of the identity of the terminal via the SA-cell

15. The method according to claim 14, further comprising the step of deactivating, at least for transmitting, the LA-cell radio interface prior to activating, at least for transmitting, the SA-cell radio interface.

16. A computer program comprising software code portions configured, when executed by a processor of a terminal, to enable the terminal to perform the steps of at least one of claims 1-15.

17. A terminal comprising means for performing the steps of at least one of the claims 1-15.

18. An SA-cell configured for use in the method according to one or more of claims 1-15 and/or with the terminal according to claim 17, the SA-cell configured at least for providing to the terminal, while having a wireless connection with the terminal in the active mode a set of configuration parameters of one or more LA-cells of the plurality of the LA-cells that are relevant for the SA-cell, the set of configuration parameters enabling the terminal to select one LA-cell out of the one or more LA-cells to camp on.
